# EUROPÄISCHE PATENTSCHRIFT

(11) **EP 3 131 997 B1**
(45) Veröffentlichungstag und Bekanntmachung des Hinweises auf die Patenterteilung: **27.02.2019**
(21) Anmeldenummer: 15715268.7
(22) Anmeldetag: 10.04.2015
(51) Int. Cl.: C09J 201/10, C08L 101/10

(54) **VERNETZBARE MASSEN AUF BASIS VON ORGANYLOXYSILANTERMINIERTEN POLYMEREN**
CROSS-LINKABLE MATERIALS BASED ON ORGANYL-OXYSILANE-TERMINATED POLYMERS
MATIÈRES RÉTICULABLES À BASE DE POLYMÈRES À TERMINAISON ORGANYLOXYSILANE

(30) Priorität: 17.04.2014 DE 102014207508
(43) Veröffentlichungstag der Anmeldung: 22.02.2017
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Budczinski, Angelika
(86) Internationale Anmeldenummer: PCT/EP2015/057851
(87) Internationale Veröffentlichungsnummer: WO 2015/158623

(56) Entgegenhaltungen:
- DE-A1-102011 006 130
- DE-A1-102012 201 734
- DATABASE WPI Week 201368 Thomson Scientific, London, GB; AN 2013-K32371 XP002740537, -& CN 102 977 840 A (SHANGHAI HUITIAN CHEM NEW MATERIAL CO LT) 20. März 2013 (2013-03-20)

## Beschreibung

Die Erfindung betrifft vernetzbare Massen von silanvernetzenden Prepolymeren, Verfahren zu deren Herstellung und deren Verwendung als Kleb- und Dichtstoffe, insbesondere zum Verkleben von Substraten.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen.

So zeigen Klebstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie sowohl reißfest als auch hochelastisch sein können. Ein weiterer entscheidender Vorteil silanvernetzender Systeme gegenüber zahlreichen anderen Kleb- und Dichtstofftechnologien (z.B. gegenüber isocyanatvernetzenden Systemen) ist die toxikologische Unbedenklichkeit der Prepolymere.

Dabei werden in vielen Anwendungen einkomponentige Systeme (1K-Systeme) bevorzugt, die bei Kontakt mit Luftfeuchtigkeit aushärten. Die entscheidenden Vorteile von einkomponentigen Systemen sind vor allem deren sehr leichte Applizierbarkeit, da hier keine Mischung verschiedener Klebstoffkomponenten durch den Anwender erforderlich ist. Neben der Zeit-/Arbeitsersparnis und der sicheren Vermeidung eventueller Dosierungsfehler, ist bei einkomponentigen Systemen auch nicht die Notwendigkeit gegeben, den Kleb-/Dichtstoff innerhalb eines meist recht engen Zeitfensters zu verarbeiten, wie dies bei mehrkomponentigen Systemen nach erfolgter Durchmischung der beiden Komponenten der Fall ist.

Eine besondere Variante von Klebstoffen auf Basis alkoxysilanvernetzender Polymere ist in DE-A 10 2011 006130 sowie DE-A 10 2011 081264 beschrieben, die neben den silanvernetzenden Polymeren auch noch Phenylsiliconharze enthalten. Die entsprechenden Harzzusätze verbessern nicht nur die Haftung auf zahlreichen verschiedenen Untergründen, sondern führen - insbesondere bei den in DE 102011081264 beschriebenen hohen Harzgehalten - auch zu Klebstoffen, die nach ihrer vollständigen Aushärtung eine erheblich verbesserte Härte und Zugscherfestigkeit aufweisen.

Nachteilig an diesen Systemen ist allerdings die vergleichsweise geringe Elastizität, welche die entsprechenden harzhaltigen Klebstoffsysteme nach ihrer Aushärtung aufweisen. So liegen die Reißdehnungen bei den im Stand der Technik beschriebenen Systemen weit unter 200%. Dies ist zwar bei weitem nicht für alle Anwendungen von Relevanz, aber insbesondere für elastische Verklebungen, wenn z.B. Materialien mit unterschiedlicher Wärmeausdehnung flächig miteinander verklebt werden, sind Klebstoffe mit hoher Elastizität erwünscht. Dies gilt auch für das flächige Verkleben von Holz, z.B. beim Verlegen von Parkettfußböden, da Holzwerkstoffe in Abhängigkeit von der Luftfeuchtigkeit erheblich arbeiten.

Gegenstand der Erfindung sind vernetzbare Massen enthaltend
(A) 100 Gewichtsteile Verbindungen der Formel

   Y-[(CR¹₂)_{b}-SiRₐ(OR²)₃₋ₐ]ₓ (I),

   wobei
   Y einen x-wertigen, über Stickstoff, Sauerstoff, Schwefel oder Kohlenstoff gebundenen Polymerrest bedeutet,
   R gleich oder verschieden sein kann und einen einwertigen, gegebenenfalls substituierten Kohlenwasserstoffrest darstellt,
   R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   R² gleich oder verschieden sein kann und Wasserstoffatom oder einen einwertigen, gegebenenfalls substituierten Kohlenwasserstoffrest darstellt,
   x eine ganze Zahl von 1 bis 10, bevorzugt 1, 2 oder 3, besonders bevorzugt 1 oder 2, ist,
   a gleich oder verschieden sein kann und 0, 1 oder 2, bevorzugt 0 oder 1, ist und
   b gleich oder verschieden sein kann und eine ganze Zahl von 1 bis 10, bevorzugt 1, 3 oder 4, besonders bevorzugt 1 oder 3, insbesondere 1, ist, wobei als Komponente (B) Siliconharze (B1) eingesetzt, die, jeweils bezogen auf die Gesamtzahl an Einheiten der Formel (II), mindestens 20% Einheiten der Formel (II) aufweisen, in denen e für den Wert 1 steht, und die weniger als 0,1 Gew.-%, aromatische Lösungsmittel (BL) enthält.
(B) mindestens 5 Gewichtsteile Siliconharze enthaltend Einheiten der Formel

   R³_{c}(R⁴O)_{d}R⁵ₑSiO_{(4-c-d-e)/2} (II),

   wobei
   R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
   R⁴ gleich oder verschieden sein kann und Wasserstoffatom oder einen einwertigen, gegebenenfalls substituierten Kohlenwasserstoffrest bedeutet,
   R⁵ gleich oder verschieden sein kann und einen einwertigen, SiC-gebundenen, gegebenenfalls substituierten aromatischen Kohlenwasserstoffrest bedeutet,
   c 0, 1, 2 oder 3 ist,
   d 0, 1, 2 oder 3, bevorzugt 0, 1 oder 2, besonders bevorzugt 0 oder 1, ist und
   e 0, 1 oder 2, bevorzugt 0 oder 1, ist,
   mit der Maßgabe, dass die Summe aus c+d+e kleiner oder gleich 3 ist und in mindestens 40 % der Einheiten der Formel (II) die Summe c+e gleich 0 oder 1 ist, und
(C) mindestens 26 Gewichtsteile eines nicht reaktiven Weichmachers gemäß Anspruch 1.

Der Erfindung liegt die Entdeckung zugrunde, dass die erfindungsgemäßen Massen auf Basis von organyloxysilanfunktionellen Polymeren (A), die neben den Siliconharzen (B) auch noch einen vergleichsweise hohen Anteil an nicht reaktiven Weichmachern (C) enthalten, eine deutlich verbesserte Elastizität und Reißdehnung aufweisen. Überraschend ist dabei vor allem die Entdeckung, dass die guten mechanischen Eigenschaften, insbesondere die hohe Reißfestigkeit, die durch einen Zusatz der Siliconharze (B) erreichbar sind, durch den Weichmacherzusatz nicht oder höchstens marginal verschlechtert werden.

Insbesondere überraschend ist, dass der gleichzeitige Einsatz von Harzen und Weichmachern in den erfindungsgemäßen Mengen zu extrem hohen Reißdehnungen von > 500% führen kann. Hier wäre angesichts der Lehre gemäß DE-A 10 2011 006130 zu erwarten gewesen, dass sich ein Zusatz von Phenylsiliconharzen stark negativ auf die Reißdehnung auswirkt. Bei den erfindungsgemäßen Formulierungen ist jedoch das genaue Gegenteil der Fall.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Als Polymere, welche dem Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind.

Beispiele für Polymerreste Y sind Polyester-, Polyether-, Polyurethan-, Polyalkylen- und Polyacrylatreste.

Bei Polymerrest Y handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer und Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR'- an die Gruppe bzw. Gruppen -[(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butyl-, die diversen Stereoisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen - [(CR¹₂)_{b}-SiRₐ(OR²)₃₋ₐ] an beliebigen Stellen im Polymer aufweisen, wie etwa kettenständig und/oder endständig.

Bevorzugt handelt es sich bei Rest Y um Polyurethanreste oder Polyoxyalkylenreste, besonders bevorzugt um kettenförmige Polyurethanreste oder kettenförmige Polyoxyalkylenreste mit jeweils 0 bis 3 Verzweigungsstellen mit endständig angebundenen Gruppen - [(CR¹₂)_{b}-SiRₐ(OR²)₃₋ₐ], wobei als Verzweigungsstellen im Sinne der Erfindung alle Abzweigungen von der Hauptkette mit mehr als einem Kohlenstoffatom zu verstehen sind und die Reste und Indizes die oben genannten Bedeutungen haben.

Insbesondere handelt es sich bei Rest Y in Formel (I) um kettenförmige Polyurethanreste oder kettenförmige Polyoxyalkylenreste ohne Verzweigungsstellen mit endständig angebundenen Gruppen - [(CR¹₂)_{b}-SiRₐ(OR²)₃₋ₐ], wobei die Reste und Indizes die oben genannten Bedeutungen haben.

Bei den Polyurethanresten Y handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)_{b}-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Die Reste Y weisen dabei vorzugsweise mittlere Molmassen Mₙ (Zahlenmittel) von 400 bis 30 000 g/mol, bevorzugt von 4 000 bis 20 000 g/mol, auf. Geeignete Verfahren zur Herstellung einer entsprechenden Komponente (A) sowie auch Beispiele für die Komponente (A) selbst sind unter anderem in EP 1 093 482 B1 (Absätze [0014]-[0023], [0039]-[0055] sowie Beispiel 1 und Vergleichsbeispiel 1) oder EP 1 641 854 B1 (Absätze [0014]-[0035], Beispiele 4 und 6 sowie die Vergleichsbeispiele 1 und 2) beschrieben, die zum Offenbarungsgehalt der vorliegenden Anmeldung zu zählen sind.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bei den Polyoxyalkylenresten Y handelt es sich bevorzugt um lineare oder verzweigte Polyoxyalkylenreste, besonders bevorzugt um Polyoxypropylenreste, deren Kettenenden vorzugsweise über -O-C(=O)-NH- oder -O- an die Gruppe bzw. Gruppen -[(CR¹₂)_{b}-SiRₐ(OR²)₃₋ₐ] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe - [(CR¹₂)_{b}-SiRₐ(OR²)₃₋ₐ] gebunden. Die Polyoxyalkylenreste Y weisen vorzugsweise mittlere Molmassen Mₙ von 4 000 bis 30 000 g/mol, bevorzugt von 8 000 bis 20 000 g/mol, auf. Geeignete Verfahren zur Herstellung einer entsprechenden Komponente (A) sowie auch Beispiele für die Komponente (A) selbst sind unter anderem in EP 1 535 940 B1 (Absätze [0005] - [0025] sowie Beispiele 1-3 und Vergleichsbeispiel 1-4) oder EP 1 896 523 B1 (Absätze [0008]-[0047]) beschrieben, die zum Offenbarungsgehalt der vorliegenden Anmeldung zu zählen sind.

Bei den Endgruppen der erfindungsgemäß eingesetzten Verbindungen (A) handelt es sich vorzugsweise um solche der allgemeinen Formeln

-NH-C(=O)-NR'-(CR¹₂)_{b}-SiRₐ(OR²)₃₋ₐ (IV),

-O-C(=O)-NH-(CR¹₂)_{b}-SiRₐ(OR²)₃₋ₐ (V)

oder

-O-(CR¹₂)_{b}-SiRₐ(OR²)₃₋ₐ (VI),

wobei die Reste und Indizes eine der oben dafür angegebenen Bedeutungen haben.

Sofern es sich bei den Verbindungen (A) um Polyurethane handelt, was bevorzugt ist, weisen diese vorzugsweise eine oder mehrere der Endgruppen
-NH-C(=O)-NR'-(CH₂)₃-Si(OCH₃)₃,
-NH-C(=O)-NR'-(CH₂)₃-Si(OC₂H₅)₃,
-O-C(=O)-NH-(CH₂)₃-Si(OCH₃)₃ oder
-O-C(=O)-NH-(CH₂)₃-Si(OC₂H₅)₃ auf,
wobei R' die oben genannte Bedeutung hat.

Sofern es sich bei den Verbindungen (A) um Polypropylenglycole handelt, was besonders bevorzugt ist, weisen diese vorzugsweise eine oder mehrere der Endgruppen
-O-(CH₂)₃-Si(CH₃)(OCH₃)₂,
-O-(CH₂)₃-Si(OCH₃)₃,
-O-C(=O)-NH-(CH₂)₃-Si(OC₂H₅)₃,
-O-C(=O)-NH-CH₂-Si(CH₃)(OC₂H₅)₂,
-O-C(=O)-NH-CH₂-Si(OCH₃)₃,
-O-C(=O)-NH-CH₂-Si(CH₃)(OCH₃)₂ oder
-O-C(=O)-NH- (CH₂)₃-Si(OCH₃)₃ auf,
wobei die beiden letztgenannten Endgruppen besonders bevorzugt werden.

Die mittleren Molekulargewichte Mₙ der Verbindungen (A) betragen vorzugsweise mindestens 400 g/mol, besonders bevorzugt mindestens 4 000 g/mol, insbesondere mindestens 10 000 g/mol, und vorzugsweise höchstens 30 000 g/mol, besonders bevorzugt höchstens 20 000 g/mol, insbesondere höchstens 19 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die Viskosität wird im Rahmen der vorliegenden Erfindung nach einer Temperierung auf 23°C mit einem DV 3 P-Rotationsviskosimeter von Fa. A. Paar (Brookfieldsysteme), unter Verwendung von Spindel 5 bei 2,5 UPM entsprechend der ISO 2555 bestimmt.

Die erfindungsgemäß eingesetzten Verbindungen (A) sind handelsübliche Produkte oder können nach in der Chemie gängigen Verfahren hergestellt werden.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98%, aller an den Rest Y gebundenen Silylgruppen identisch sind. Es kann dann aber auch eine Komponente (A) eingesetzt werden, die zumindest zum Teil Verbindungen der Formel (I) enthält, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

Vorzugsweise enthalten die erfindungsgemäßen Massen Verbindungen (A) in Konzentrationen von höchstens 60 Gew.-%, besonders bevorzugt höchstens 40 Gew.-%, und vorzugsweise mindestens 10 Gew.-%, besonders bevorzugt mindestens 15 Gew.-%.

Bezogen auf 100 Gewichtsteile der Komponente (A), enthalten die erfindungsgemäßen Massen vorzugsweise mindestens 10 Gewichtsteile, besonders bevorzugt mindestens 15 Gewichtsteile, Komponente (B). Bezogen auf 100 Gewichtsteile der Komponente (A), enthalten die erfindungsgemäßen Massen vorzugsweise höchstens 200 Gewichtsteile, besonders bevorzugt höchstens 60 Gewichtsteile, insbesondere höchstens 50 Gewichtsteile, Komponente (B) .

Komponente (B) besteht vorzugsweise zu mindestens 90 Gew.-% aus Einheiten der Formel (II). Besonders bevorzugt besteht Komponente (B) ausschließlich aus Einheiten der Formel (II).

Beispiele für Reste R³ sind die oben für R angegebenen aliphatischen Beispiele. Es kann sich bei Rest R³ aber auch um zweiwertige aliphatische Reste handeln, die zwei Silylgruppen der Formel (II) miteinander verbinden, wie z.B. Alkylenreste mit 1 bis 10 Kohlenstoffatomen, wie etwa Methylen-, Ethylen-, Propylen- oder Butylenreste. Ein besonders gängiges Beispiel für einen zweiwertigen aliphatischen Rest stellt der Ethylenrest dar.

Bevorzugt handelt es sich bei Rest R³ jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 6 Kohlenstoffatomen, insbesondere um den Methylrest.

Beispiele für Rest R⁴ sind Wasserstoffatom oder die für Rest R angegebenen Beispiele.

Bevorzugt handelt es sich bei Rest R⁴ um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Beispiele für Reste R⁵ sind die oben für R angegebenen aromatischen Reste.

Bevorzugt handelt es sich bei Rest R⁵ um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphtyl- oder Styrylreste, besonders bevorzugt um den Phenylrest.

Bevorzugt werden als Komponente (B) Siliconharze eingesetzt, in denen mindestens 90% aller Reste R³ für Methylrest stehen.

Bevorzugt werden als Komponente (B) Siliconharze eingesetzt, in denen mindestens 90% aller Reste R⁴ für Methyl-, Ethyl-, Propyl- oder Isopropylrest stehen.

Bevorzugt werden als Komponente (B) Siliconharze eingesetzt, in denen mindestens 90% aller Reste R⁵ für Phenylrest stehen.

Vorzugsweise werden erfindungsgemäß Siliconharze (B) eingesetzt, die mindestens 20%, besonders bevorzugt mindestens 40%, Einheiten der Formel (II) aufweisen, in denen c gleich 0 ist, jeweils bezogen auf die Gesamtzahl an Einheiten der Formel (II) .
Vorzugsweise werden Siliconharze (B) eingesetzt, die, jeweils bezogen auf die Gesamtzahl an Einheiten der Formel (II), mindestens 70%, besonders bevorzugt mindestens 80%, Einheiten der Formel (II) aufweisen, in denen d für den Wert 0 oder 1 steht.

Erfindungsgemäß werden als Komponente (B) Siliconharze (B1) eingesetzt, die, jeweils bezogen auf die Gesamtzahl an Einheiten der Formel (II), mindestens 20%, besonders bevorzugt mindestens 40%, insbesondere mindestens 50%, Einheiten der Formel (II) aufweisen, in denen e für den Wert 1 steht.
In einer besonderen Ausführungsform der Erfindung werden Siliconharze (B1) eingesetzt, die ausschließlich Einheiten der Formel (II) aufweisen, in denen e gleich 1 ist.
In einer besonders bevorzugten Ausführung der Erfindung werden als Komponente (B) Siliconharze (B1) eingesetzt, die, jeweils bezogen auf die Gesamtzahl an Einheiten der Formel (II), mindestens 20%, besonders bevorzugt mindestens 40%, insbesondere mindestens 50%, Einheiten der Formel (II) aufweisen, in denen e für den Wert 1 und c für den Wert 0 stehen.
Beispiele für die erfindungsgemäß eingesetzten Siliconharze (B) sind Organopolysiloxanharze, die im Wesentlichen, vorzugsweise ausschließlich, aus Einheiten bestehen, ausgewählt aus (Q)-Einheiten der Formeln SiO_{4/2}, Si(OR⁴)O_{3/2}, Si (OR⁴)₂O_{2/2} und Si (OR⁴)₃O_{1/2}, (T)-Einheiten der Formeln PhSiO_{3/2}, PhSi (OR⁴)O_{2/2} und PhSi (OR⁴)₂O_{1/2}, (D) -Einheiten der Formeln Me₂SiO_{2/2} und Me₂Si(OR⁴)O_{1/2} sowie (M) -Einheiten der Formel Me₃SiO_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen, besonders bevorzugt für unsubstituierte Alkylreste mit 1 bis 4 Kohlenstoffatomen, stehen, wobei das Harz pro Mol (T)-Einheiten bevorzugt 0-2 Mol (Q)-Einheiten, 0-2 Mol (D)-Einheiten und 0-2 Mol (M)-Einheiten aufweist.

Bevorzugte Beispiele für die erfindungsgemäß eingesetzten Siliconharze (B) sind Organopolysiloxanharze, die im Wesentlichen, vorzugsweise ausschließlich, aus Einheiten bestehen, ausgewählt aus T-Einheiten der Formeln PhSiO_{3/2}, PhSi (OR⁴)O_{2/2} und PhSi (OR⁴)₂O_{1/2} sowie T-Einheiten der Formeln MeSiO_{3/2}, Me-Si (OR⁴)O_{2/2} und MeSi (OR⁴)₂O_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen stehen.

Weitere bevorzugte Beispiele für die erfindungsgemäß eingesetzten Siliconharze (B) sind Organopolysiloxanharze, die im Wesentlichen, vorzugsweise ausschließlich, aus Einheiten bestehen, ausgewählt aus T-Einheiten der Formeln PhSiO_{3/2}, PhSi (OR⁴)O_{2/2} und PhSi (OR⁴)₂O_{1/2}, T-Einheiten der Formeln MeSiO_{3/2}, MeSi (OR⁴)O_{2/2} und MeSi (OR⁴)₂O_{1/2} sowie D-Einheiten der Formeln Me₂SiO_{2/2} und Me₂Si(OR⁴)O_{1/2}, wobei Me für Methylrest, Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, mit einem molaren Verhältnis von Phenylsilicon- zu Methylsilicon-Einheiten von 0,5 bis 4,0. Der Gehalt an D-Einheiten in diesen Siliconharzen liegt vorzugsweise unter 10 Gew.-%.

Besonders bevorzugte Beispiele für die erfindungsgemäß eingesetzten Siliconharze (B1) sind Organopolysiloxanharze, die zu 80%, vorzugsweise zu 90%, insbesondere ausschließlich, aus T-Einheiten der Formeln PhSiO_{3/2}, PhSi(OR⁴)O_{2/2} und PhSi (OR⁴)₂O_{1/2} bestehen, wobei Ph für Phenylrest und R⁴ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, jeweils bezogen auf die Gesamtzahl an Einheiten.

Vorzugsweise besitzen die erfindungsgemäß eingesetzten Siliconharze (B) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 10 000 g/mol, insbesondere bei höchstens 3 000 g/mol.

Die erfindungsgemäß eingesetzten Siliconharze (B) können bei 23°C und 1000 hPa sowohl fest als auch flüssig sein, wobei Siliconharze (B) bevorzugt flüssig sind. Vorzugsweise besitzen die Siliconharze (B) eine Viskosität von 10 bis 100 000 mPas, vorzugsweise von 50 bis 50 000 mPas, insbesondere von 100 bis 20 000 mPas.

Die erfindungsgemäß eingesetzten Siliconharze (B) besitzen vorzugsweise ein Polydispersität (M_{w}/Mₙ) von maximal 5, bevorzugt von maximal 3.

Die massenmittlere Molmasse M_{w} wird dabei ebenso wie die zahlenmittlere Molmassen Mₙ mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die Siliconharze (B) können sowohl in reiner Form als auch in Form einer Mischung mit einem geeigneten Lösungsmittel (BL) eingesetzt werden.

Als Lösungsmittel (BL) können dabei sämtliche bei Raumtemperatur gegenüber den Komponenten (A) und (B) nicht reaktive Verbindungen mit einem Siedepunkt <250°C bei 1013 mbar eingesetzt werden.

Beispiele für Lösungsmittel (BL) sind Ether (z.B. Diethylether, Methyl-t-butylether, Etherderivate des Glycols, THF), Ester (z.B. Ethylacetat, Butylacetat, Glycolester), aliphatische Kohlenwasserstoffe (z.B. Pentan, Cyclopentan, Hexan, Cyclohexan, Heptan, Octan oder auch längerkettige verzweigte und unverzweigte Alkane), Ketone (z.B. Aceton, Methylethylketon), Aromaten (z.B. Toluol, Xylol, Ethylbenzol, Chlorbenzol) oder auch Alkohole (z.B. Methanol, Ethanol, Glycol, Propanol, isoPropanol, Glycerin, Butanol, iso-Butanol, t-Butanol).

Viele kommerziell erhältlichen Harze (B1), wie z.B. die Harze SILRES® SY 231, SILRES® IC 231, SILRES® IC 368 oder SILRES® IC 678 der Fa. Wacker Chemie AG (D-München), sind zwar bei 23°C und 1013 hPa flüssig, enthalten herstellungsbedingt aber dennoch kleine Mengen Lösungsmittel (BL), insbesondere Toluol. So enthalten die oben genannten Harze etwa 0,1 Gew.-% Toluol, bezogen auf das Gesamtgewicht des jeweiligen Harzes.

Erfindungsgemäß werden als Komponente (B) Harze (B1) eingesetzt, die weniger als 0,1 Gew.-%, bevorzugt weniger als 0,05 Gew.-%, besonders bevorzugt weniger als 0,02 Gew.-%, insbesondere weniger als 0,01 Gew.-%, aromatische Lösungsmittel (BL) enthalten.
In einer besonders bevorzugten Ausführung der Erfindung werden als Komponente (B) Harze (B1) eingesetzt, die mit Ausnahme von Alkoholen R⁴OH weniger als 0,1 Gew.-%, bevorzugt weniger als 0,05 Gew.-%, besonders bevorzugt weniger als 0,02 Gew.-%, insbesondere weniger als 0,01 Gew.-%, Lösungsmittel (BL) enthalten, wobei R⁴ die oben genannte Bedeutung aufweist.
In einer ganz besonders bevorzugten Ausführung der Erfindung werden als Komponente (B) Harze (B1) eingesetzt, die mit Ausnahme von Alkoholen R⁴OH überhaupt keine Lösungsmittel (BL) enthalten mit R⁴ gleich der oben genannten Bedeutung, wobei Alkohole R⁴OH herstellungsbedingt in Mengen von bevorzugt bis zu 10 Gew.-%, besonders bevorzugt bis zu 5 Gew.-%, enthalten sein können.
Bei den erfindungsgemäß eingesetzten Siliconharzen (B) bzw. (B1) handelt es sich um handelsübliche Produkte oder können nach in der Siliciumchemie gängigen Methoden hergestellt werden.
Vorzugsweise werden die als bevorzugt bzw. besonders bevorzugt beschriebenen Verbindungen (A) in Kombination mit Harzen (B1) und Weichmachern (C) in den genannten Mengenverhältnissen eingesetzt.
Als nicht reaktive Weichmacher (C) gelten im Rahmen der vorliegenden Erfindung sämtliche organischen Verbindungen, die bei Temperaturen <80°C weder mit Wasser noch mit den Komponenten (A) und (B) reagieren, bei 20°C und 1013 hPa flüssig sind, einen Siedepunkt >250°C bei 1013 hPa aufweisen und ausgewählt sind aus den Stoffgruppen bestehend aus
- vollständig veresterten aromatischen oder aliphatischen Carbonsäuren,
- vollständig veresterten Derivaten der Phosphorsäure,
- vollständig veresterten Derivaten der Sulfonsäuren,
- verzweigten oder unverzweigten gesättigten Kohlenwasserstoffen,
- Polystyrolen,
- Polybutadienen,
- Polyisobutylenen,
- Polyestern und
- Polyethern.

Beispiele für Carbonsäureester (C) sind Phthalsäureester, wie z.B. Dioctylphthalat, Diisooctylphthalat und Diundecylphthalat; perhydrierte Phthalsäureester, wie z.B. 1,2-Cyclohexandicarbonsäurediisononylester und 1,2-Cyclohexandicarbonsäuredioctylester; Adipinsäureester, wie z.B. Dioctyladipat; Benzoesäureester; Ester der Trimellitsäure, Glycolester; Ester gesättigter Alkandiole, wie z.B. 2,2,4-Trimethyl-1,3-pentandiolmonoisobutyrate und 2,2,4-Trimethyl-1,3-pentandioldiisobutyrate.

Beispiele für Polyether (C) sind Polyethylenglycole, Poly-THF und Polypropylenglycole mit Molmassen von vorzugsweise 200 bis 20 000 g/mol.

Bevorzugt werden Weichmacher (C) mit Molmassen bzw. im Falle polymerer Weichmacher mittlerer Molmassen Mₙ von mindestens 200 g/mol, besonders bevorzugt von größer 500 g/mol, insbesondere von größer 900 g/mol, eingesetzt. Vorzugsweise besitzen sie Molmassen bzw. mittlere Molmassen Mₙ von maximal 20 000 g/mol, besonders bevorzugt von maximal 10 000 g/mol, insbesondere höchstens 4 000 g/mol.

Bevorzugt werden als Komponente (C) phthalsäureesterfreie Weichmacher, wie perhydrierte Phthalsäureester, Ester der Trimellitsäure, Polyester oder Polyether, eingesetzt.

Besonders bevorzugt handelt es sich bei Weichmacher (C) um Polyether, insbesondere um Polyethylenglycole, Poly-THF und Polypropylenglycole, ganz besonders bevorzugt um Polypropylenglycole. Die bevorzugten Polyether (C) weisen dabei Molmassen vorzugsweise zwischen 400 und 20 000 g/mol, besonders bevorzugt zwischen 800 und 12 000 g/mol, insbesondere zwischen 1 000 und 8 000 g/mol, auf.

Bezogen auf 100 Gewichtsteile der Komponente (A) enthalten die erfindungsgemäßen Massen bevorzugt mindestens 30 Gewichtsteile und besonders bevorzugt mindestens 35 Gewichtsteile Komponente (C). Bezogen auf 100 Gewichtsteile der Komponente (A) enthalten die erfindungsgemäßen Massen vorzugsweise höchstens 500 Gewichtsteile, besonders bevorzugt höchstens 300 Gewichtsteile, insbesondere höchstens 150 Gewichtsteile, Komponente (C).

Zusätzlich zu den eingesetzten Komponenten (A), (B) und (C) können die erfindungsgemäßen Massen alle weiteren Stoffe enthalten, die auch bisher in vernetzbaren Massen eingesetzt wurden und die unterschiedlich sind zu Komponenten (A), (B) und (C), wie z.B. Stickstoff aufweisende Organosiliciumverbindung (D), Füllstoffe (E), Katalysator (F), Haftvermittler (G), Wasserfänger (H), Additive (I) und Zuschlagstoffe (J).

Bevorzugt handelt es sich bei Komponente (D) um Organosiliciumverbindungen enthaltend Einheiten der Formel

DₕSi(OR⁷)_{g}R⁶_{f}O_{(4-f-g-h)/2} (III),

worin
R⁶ gleich oder verschieden sein kann und einen einwertigen, gegebenenfalls substituierten SiC-gebundenen, von Stickstoff freien organischen Rest bedeutet,
R⁷ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit mindestens einem nicht an eine Carbonylgruppe (C=O) gebundenen Stickstoffatom bedeutet,
f 0, 1, 2 oder 3, bevorzugt 1, ist,
g 0, 1, 2 oder 3, bevorzugt 1, 2 oder 3, besonders bevorzugt 1 oder 3, ist und
h 0, 1, 2, 3 oder 4, bevorzugt 1, ist,
mit der Maßgabe, dass die Summe aus f+g+h kleiner oder gleich 4 ist und pro Molekül mindestens ein Rest D anwesend ist.

Bei den erfindungsgemäß gegebenenfalls eingesetzten Organosiliciumverbindungen (D) kann es sich sowohl um Silane handeln, d.h. Verbindungen der Formel (III) mit f+g+h=4, als auch um Siloxane, d.h. Verbindungen enthaltend Einheiten der Formel (III) mit f+g+h≤3, wobei es sich bevorzugt um Silane handelt.

Beispiele für Rest R⁶ sind die für R angegebenen Beispiele.

Bei Rest R⁶ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für gegebenenfalls substituierte Kohlenwasserstoffreste R⁷ sind die für Rest R angegebenen Beispiele.

Bei den Resten R⁷ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH3)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂N(CH₂)₃-, (C₄H₉)₂N(CH₂)₃-, (C₅H₁₁)₂N(CH₂)₃-, (C₆H₁₃)₂N(CH₂)₃-, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)- , C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH3)₂N(CH₂)-, (C₂H₅)₂N(CH₂)-, (C₃H₇)₂N(CH₂)-, (C₄H₉)₂N(CH₂)-, (C₅H₁₁)₂N(CH₂)-, (C₆H₁₃)₂N(CH₂)-, (C₇H₁₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- und cyclo-C₆H₁₁NH(CH₂)₃-Rest.

Beispiele für die erfindungsgemäß gegebenenfalls eingesetzten Silane der Formel (III) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH) ₂CH₃, Phenyl-NH (CH₂)₃-Si(OCH₃)₃, Phenyl-NH (CH₂)₃-Si(OC₂H₅)₃, Phenyl-NH (CH₂)₃-Si(OCH₃)₂CH₃, Phenyl-NH (CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si (OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si (OH) ₂CH₃, Phenyl-NH (CH₂)-Si (OCH₃)₃, Phenyl-NH (CH₂)-Si(OC₂H₅)₃, Phenyl-NH(CH₂)-Si(OCH₃)₂CH₃, Phenyl-NH (CH₂)-Si (OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß gegebenenfalls eingesetzten Organosiliciumverbindungen (D) können in den erfindungsgemäßen Massen auch die Funktion eines Härtungskatalysators oder -cokatalysators übernehmen.

Des Weiteren können die erfindungsgemäß gegebenenfalls eingesetzten Organosiliciumverbindungen (D) als Haftvermittler und/oder als Wasserfänger wirken.

Die erfindungsgemäß gegebenenfalls eingesetzten Organosiliciumverbindungen (D) sind handelsübliche Produkte bzw. nach in der Chemie gängigen Verfahren herstellbar.

Falls die erfindungsgemäßen Massen Komponente (D) enthalten, handelt es sich um Mengen von bevorzugt 0,1 bis 25 Gewichtsteilen, besonders bevorzugt 0,2 bis 20 Gewichtsteilen, insbesondere 0,5 bis 15 Gewichtsteilen, jeweils bezogen auf 100 Gewichtsteile Komponente (A). Die erfindungsgemäßen Massen enthalten bevorzugt Komponente (D).

Bei den in den erfindungsgemäßen Massen gegebenenfalls eingesetzten Füllstoffen (E) kann es sich um beliebige, bisher bekannte Füllstoffe handeln.

Beispiele für Füllstoffe (E) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberflächen; Aluminiumtrihydroxid, hohlkugelförmiger Füllstoffe, wie keramische Mikrokugel, elastische Kunststoffkugeln, Glaskugeln oder faserförmige Füllstoffe. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (E) um Calciumcarbonat, Talkum, Aluminiumtrihydroxid sowie Kieselsäure. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (E) haben einen Feuchtigkeitsgehalt von bevorzugt unter 1 Gew.-%, besonders bevorzugt von unter 0,5 Gew.-%.

Falls die erfindungsgemäßen Massen Füllstoffe (E) enthalten, handelt es sich um Mengen von vorzugsweise 10 bis 2000 Gewichtsteilen, besonders bevorzugt 40 bis 1000 Gewichtsteilen, insbesondere 80 bis 300 Gewichtsteilen, jeweils bezogen auf 100 Gewichtsteile Bestandteil (A). Die erfindungsgemäßen Massen enthalten bevorzugt Füllstoffe (E).

In einer besonders bevorzugten Ausführung der Erfindung enthalten die erfindungsgemäßen Massen als Füllstoffe (E) eine Kombination aus
a) Kieselsäure, insbesondere pyrogene Kieselsäure, und
b) Kreide, Aluminiumtrihydroxid und/oder Talkum.

Falls die erfindungsgemäßen Massen diese besonders bevorzugte Kombination verschiedener Füllstoffe (E) enthalten, enthalten sie vorzugsweise 1 bis 50 Gewichtsteile, besonders bevorzugt 5 bis 20 Gewichtsteile, Kieselsäure, insbesondere pyrogene Kieselsäure, und vorzugsweise 10 bis 500 Gewichtsteile, besonders bevorzugt 50 bis 300 Gewichtsteile, Calciumcarbonat, Aluminiumtrihydroxid, Talkum oder Mischungen aus diesen Materialien, jeweils bezogen auf 100 Gewichtsteile Bestandteil (A).

In einer weiteren besonders bevorzugten Ausführung der Erfindung enthalten die erfindungsgemäßen Massen als Füllstoffe (E) ausschließlich Calciumcarbonat, Aluminiumtrihydroxid und/oder Talkum in Mengen von vorzugsweise insgesamt 10 bis 500 Gewichtsteilen, besonders bevorzugt 50 bis 300 Gewichtsteilen, jeweils bezogen auf 100 Gewichtsteile Bestandteil (A).

Bei den in den erfindungsgemäßen Massen gegebenenfalls eingesetzten Katalysatoren (F) kann es sich um beliebige, bisher bekannte Katalysatoren für durch Silankondensation härtende Massen handeln.

Beispiele für metallhaltige Härtungskatalysatoren (F) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (F) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin.

Ebenfalls als Katalysator (F) können saure Verbindungen eingesetzt werden, wie Phosphorsäure und ihre teilveresterten Derivate, Toluolsulfonsäure, Schwefelsäure, Salpetersäure oder auch organische Carbonsäuren, z.B. Essigsäure und Benzoesäure.

Falls die erfindungsgemäßen Massen Katalysatoren (F) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

In einer Ausführung der Erfindung handelt es sich bei den gegebenenfalls eingesetzten Katalysatoren (F) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90 Gew.-%, vorzugsweise zu mindestens 95 Gew.-%, aus Verbindungen der Formel (I) besteht, in denen b ungleich 1 ist.

Bei den erfindungsgemäßen Massen kann vorzugsweise dann auf metallhaltige Katalysatoren (F), und insbesondere auf Zinn enthaltende Katalysatoren, verzichtet werden, wenn die Komponente (A) ganz oder zumindest teilweise, d.h. zu mindestens 10 Gew.- %, vorzugsweise zu mindestens 20 Gew.-%, aus Verbindungen der Formel (I) besteht, in denen b gleich 1 ist und R¹ die Bedeutung von Wasserstoffatom hat. Diese Ausführungsform der Erfindung ohne metall- und insbesondere ohne zinnhaltige Katalysatoren wird besonders bevorzugt.

Bei den in den erfindungsgemäßen Massen gegebenenfalls eingesetzten Haftvermittlern (G) kann es sich um beliebige, bisher für durch Silankondensation härtende Systeme beschriebene Haftvermittler handeln.

Beispiele für Haftvermittler (G) sind Epoxysilane, wie Glycidoxypropyltrimethoxysilane, Glycidoxypropyl-methyldimethoxysilan, Glycidoxypropyltriethoxysilan oder Glycidoxypropyl-methyldiethoxysilan, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyl-dimethoxysilylmethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyltrimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Massen Haftvermittler (G) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse.

Bei den in den erfindungsgemäßen Massen gegebenenfalls eingesetzten Wasserfängern (H) kann es sich um beliebige, für durch Silankondensation härtende Systeme beschriebene Wasserfänger handeln.

Beispiele für Wasserfänger (H) sind Silane wie Vinyltrimethoxysilan, Vinyltriethoxysilan, Vinylmethyldimethoxysilan, Tetraethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan, wobei Vinyltrimethoxysilan bevorzugt ist.

Falls die erfindungsgemäßen Massen Wasserfänger (H) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse. Die erfindungsgemäßen Massen enthalten bevorzugt Wasserfänger (H).

Bei den in den erfindungsgemäßen Massen gegebenenfalls eingesetzten Additiven (I) kann es sich um beliebige, bisher bekannte, für silanvernetzende Systeme typische Additive handeln.

Bei den erfindungsgemäß gegebenenfalls eingesetzten Additiven (I) handelt es sich um Verbindungen, die unterschiedlich sind zu den Komponenten (A) bis (H), bevorzugt um Antioxidantien, UV-Stabilisatoren, wie z.B. sog. HALS-Verbindungen, Fungizide, handelsübliche Entschäumer, z.B. der Firma BYK (D-Wesel), handelsübliche Netzmittel, z.B. der Firma BYK (D-Wesel), und Pigmente.

Falls die erfindungsgemäßen Massen Additive (I) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Bestandteil (A). Die erfindungsgemäßen Massen enthalten bevorzugt Additive (I).

Bei den erfindungsgemäß gegebenenfalls eingesetzten Zuschlagsstoffen (J), die unterschiedlich zu Komponente (I) sind, handelt es sich bevorzugt um Reaktivweichmacher, Rheologieadditive, Flammschutzmittel und organische Lösungsmittel.

Bevorzugte Reaktivweichmacher (J) sind Silane, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (J) handelt es sich um bei Raumtemperatur und einem Druck von 1013 hPa feste Verbindungen, besonders bevorzugt Polyamidwachse, hydrierte Rizinusöle oder Stearate.

Als Flammschutzmittel (J) können alle typischen Flammschutzmittel eingesetzt werden, wie sie für Kleb- und Dichtstoffsysteme typisch sind, insbesondere halogenierte Verbindungen und Derivate.

Beispiele für organische Lösungsmittel (J) sind die bereits oben als Lösungsmittel (BL) genannten Verbindungen, bevorzugt Alkohole.

Den erfindungsgemäßen Massen werden vorzugsweise keine organischen Lösungsmittel (J) zugesetzt.

Falls die erfindungsgemäßen Massen eine oder mehrere Komponenten (J) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Bei den erfindungsgemäßen Massen handelt es sich bevorzugt um solche enthaltend
(A) 100 Gewichtsteile Verbindungen der Formel (I),
(B) 5-60 Gewichtsteile Siliconharze enthaltend Einheiten der Formel (II), wobei es sich vorzugsweise um Harze (B1) handelt,
(C) 26-300 Gewichtsteile Weichmacher,
(D) 0,1-25 Gewichtsteile Organosiliciumverbindungen enthaltend Einheiten der Formel (III),
   gegebenenfalls
(E) Füllstoffe,
   gegebenenfalls
(F) Katalysatoren,
   gegebenenfalls
(G) Haftvermittler,
   gegebenenfalls
(H) Wasserfänger,
   gegebenenfalls
(I) Additive und gegebenenfalls
(J) Zuschlagstoffe.

Besonders bevorzugt handelt es sich bei den erfindungsgemäßen Massen um solche enthaltend
(A) 100 Gewichtsteile Verbindungen der Formel (I),
(B) 10-50 Gewichtsteile Siliconharze enthaltend Einheiten der Formel (II), wobei es sich vorzugsweise um Harze (B1) handelt,
(C) 30-150 Gewichtsteile Weichmacher,
(D) 0,1-25 Gewichtsteile Organosiliciumverbindungen enthaltend Einheiten der Formel (III),
   gegebenenfalls
(E) Füllstoffe,
   gegebenenfalls
(F) Katalysatoren,
   gegebenenfalls
(G) Haftvermittler,
   gegebenenfalls
(H) Wasserfänger,
   gegebenenfalls
(I) Additive und
   gegebenenfalls
(J) Zuschlagstoffe.

Insbesondere bevorzugt handelt es sich bei den erfindungsgemäßen Massen um solche enthaltend
(A) 100 Gewichtsteile Verbindungen der Formel (I),
(B) 10-50 Gewichtsteile Siliconharze enthaltend Einheiten der Formel (II), wobei es sich vorzugsweise um Harze (B1) handelt,
(C) 30-150 Gewichtsteile Weichmacher,
(D) 0,1-25 Gewichtsteile Organosiliciumverbindungen enthaltend Einheiten der Formel (III),
(E) 40 bis 1000 Gewichtsteile Füllstoffe,
   gegebenenfalls
(F) Katalysatoren,
   gegebenenfalls
(G) Haftvermittler,
   gegebenenfalls
(H) Wasserfänger,
   gegebenenfalls
(I) Additive und
   gegebenenfalls
(J) Zuschlagstoffe.

Ganz besonders bevorzugt handelt es sich bei den erfindungsgemäßen Massen um solche enthaltend
(A) 100 Gewichtsteile Verbindungen der Formel (I), bei denen Y für einen Polypropylenoxidrest steht,
(B) 10-50 Gewichtsteile Siliconharze (B1) bestehend aus Einheiten der Formel (II),
(C) 30-150 Gewichtsteile Weichmacher,
(D) 0,1-25 Gewichtsteile Organosiliciumverbindungen bestehend aus Einheiten der Formel (III),
(E) 60 bis 500 Gewichtsteile Füllstoffe,
   gegebenenfalls
(F) Katalysatoren,
   gegebenenfalls
(G) Haftvermittler,
(H) 0,5 bis 30 Gewichtsteile Wasserfänger,
(I) 0,1 bis 10 Gewichtsteile Additive, ausgewählt aus Antioxidantien und UV-Stabilisatoren, und
   gegebenenfalls
(J) Zuschlagstoffe.

Die erfindungsgemäßen Massen enthalten außer den genannten Komponenten (A) bis (J) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen handelt es sich bevorzugt um zähflüssig bis pastöse Massen mit Viskositäten von bevorzugt 500 bis 3 000 000 mPas, besonders bevorzugt von 1 500 bis 1 500 000 mPas, jeweils bei 25°C.

Die Herstellung der erfindungsgemäßen Massen kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Masse durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Massen handelt es sich bevorzugt um einkomponentige vernetzbare Massen. Die erfindungsgemäßen Massen können aber auch Teil von zweikomponentigen Vernetzungssystemen sein, bei denen in einer zweiten Komponente OH-haltige Verbindungen, wie Wasser, hinzugefügt werden.

Die erfindungsgemäßen Massen sind bei Ausschluss von Wasser lagerfähig und bei Zutritt von Wasser vernetzbar.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5°C bis 15°C oder bei 30°C bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Masse.

Vorzugsweise haben die erfindungsgemäßen Formkörper eine Reißfestigkeit von mindestens 1 MPa, besonders bevorzugt von mindestens 1,5 MPa, insbesondere von mindestens 2 MPa, jeweils gemessen nach DIN EN 53504.

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Ein weiterer Gegenstand der Erfindung ist ein Verfahren zur Herstellung von Materialverbunden, bei denen die erfindungsgemäße Masse auf mindestens ein Substrat aufgebracht und anschließend vernetzen gelassen wird.

Beispiele hierfür sind Beschichtungen, Verguss, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen und mindestens einem Substrat so zusammengesetzt ist, dass zwischen den beiden Teilen eine feste, dauerhafte Verbindung besteht.

Beim erfindungsgemäßen Verfahren zur Herstellung von Materialverbunden kann die erfindungsgemäße Masse auch zwischen mindestens zwei gleichen oder verschiedenen Substraten vulkanisiert werden, wie z.B. bei Verklebungen, Laminaten oder Einkapselungen.

Beispiele für Substrate, die erfindungsgemäß verklebt oder abgedichtet werden können, sind Kunststoffe inkl. PVC, Beton, Holz, mineralische Untergründe, Metalle, Glas, Keramik und lackierte Oberflächen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 50 mm lichter Weite, z.B. von Gebäuden, Land-, Wasser- und Luftfahrzeugen, zur Abdichtung von Flächen, z.B. von Dächern, Wänden oder Böden, oder als Klebstoffe oder Verkittungsmassen, z.B. im Fensterbau oder bei der Herstellung von Vitrinen, sowie z.B. zur Herstellung von Schutzüberzügen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind.

Die erfindungsgemäßen vernetzbaren Massen haben den Vorteil, dass sie sich durch eine sehr hohe Lagerstabilität und eine hohe Vernetzungsgeschwindigkeit auszeichnen.

Ferner haben die erfindungsgemäßen vernetzbaren Massen den Vorteil, dass sie ein ausgezeichnetes Haftungsprofil aufweisen.

Des Weiteren haben die erfindungsgemäßen vernetzbaren Massen den Vorteil, dass sie leicht zu verarbeiten sind.

Sofern nicht anders angegeben, werden sämtliche Arbeitsschritte in den nachstehenden Beispielen bei einem Druck der umgebenden Atmosphäre, also etwa bei 1013 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Die Vernetzung der Massen wird bei einer relativen Luftfeuchtigkeit von etwa 50% durchgeführt. Des Weiteren beziehen sich alle Angaben von Teilen und Prozentsätzen, soweit nichts anderes angegeben ist, auf das Gewicht.

### Beispiel 1

In einem 2 l-Vierhalskolben mit Tropftrichter, Liebigkühler, KPG-Rührer und Thermometer werden 1000 g Phenyltrimethoxysilan bei Raumtemperatur vorgelegt und unter Rührung mit 20 g einer 20%-igen wässrigen Salzsäure versetzt. Anschließend wird auf eine Temperatur von 65-68°C erwärmt, bis ein schwacher Rückfluss einsetzt. Dann wird unter Rückfluss eine Mischung aus 74 g Wasser und 40 g Methanol gleichmäßig innerhalb von 30 min zugegeben. Nach Ende der Zugabe wird für weitere 10 min unter Rückfluss gerührt und danach auf Raumtemperatur abgekühlt.

Die Reaktionsmischung wird für ca. 16 h bei Raumtemperatur stehen gelassen, anschließend werden 60 g Natriumhydrogencarbonat unter Rührung zugeben, es wird für 30 min gerührt, dann wird der entstandene Feststoff durch Filtration abgetrennt. Zuletzt werden die Leichtsieder (im Wesentlichen Methanol) destillativ entfernt. Dabei werden zunächst ca. 80-90% der abzunehmenden Destillatmenge bei 1013 mbar und einer Temperatur von 120°C entfernt, anschließend wird der Druck auf 10 mbar reduziert, und während der folgenden 15-20 min werden die verbleibenden leichtsiedenden Reste abdestilliert.

Es wird ein Phenylsiliconharz mit einer mittleren Molmasse Mₙ von 1200 g/mol, einer Viskosität von 30 mPas bei 23°C und einem Gehalt an Methoxygruppen von 18 Gew.-%, bezogen auf die gesamte Harzmasse erhalten.

### Beispiel 2

### Herstellung einer erfindungsgemäßen Klebstoffformulierung

122,0 g silanterminiertes Polypropylenglycol mit einer mittleren Molmasse (Mₙ) von 18000 g/mol und 2 Endgruppen der Formel -O-C(=O)-NH-(CH₂)₃-Si(OCH₃)₃ (käuflich erhältlich unter der Bezeichnung GENIOSIL® STP-E35 bei der Fa. Wacker Chemie AG, D-München) und 59,2 g eines Polypropylenglycols mit einer mittleren Molmasse Mₙ von 2000 g/mol werden vermischt und in einem Laborplanetenmischer der Fa. PC-Laborsystem, ausgestattet mit zwei Balkenmischern, bei ca. 25°C mit 8,0 g Vinyltrimethoxysilan, 18,0 g eines Harzes hergestellt nach Beispiel 1 und 2,0 g einer Stabilisatormischung (unter der Bezeichnung TINUVIN® B 75 bei der Fa. BASF AG (Deutschland) käuflich erhältliche Mischung aus 20% Irganox® 1135 (CAS-Nr. 125643-61-0), 40 % Tinuvin® 571 (CAS-NR. 23328-53-2) und 40 % Tinuvin® 765 (CAS-NR. 41556-26-7)) für 2 Minuten bei 200 U/min homogenisiert. Danach werden 186,0 g einer mit Fettsäure beschichteten gefällten Kreide mit einem mittleren Teilchendurchmesser (D50%) von ca. 0,07 µm (käuflich erhältlich unter der Bezeichnung Hakuenka® CCR S10 bei der Shiraishi Omya GmbH, AT-Gummern) unter Rühren eine Minute bei 600 U/min aufgeschlossen. Nach Einarbeitung der Kreide werden 4 g Aminopropyl-trimethoxysilan und 0,8 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die so erhaltene Masse wird in 310 ml PE-Kartuschen abgefüllt, luftdicht verschlossen und 24 Stunden bei 20°C vor der Untersuchung gelagert.

### Beispiel 3

### Herstellung einer erfindungsgemäßen Klebstoffformulierung

Es wird vorgegangen wie in Beispiel 2 beschrieben. Allerdings werden die in Beispiel 2 angegebenen Einsatzmengen für GENIOSIL® STP-E35, das Polypropylenglycol mit einer mittleren Molmasse Mₙ von 2000 g/mol und das Phenylsiliconharz variiert. So werden hier 139,6 g GENIOSIL® STP-E35, 39,2 g eines Polypropylenglycols mit einer mittleren Molmasse Mₙ von 2000 g/mol und 20,4 g eines Harzes hergestellt nach Beispiel 1 eingesetzt. Die Einsatzmengen aller übrigen Rohstoffe bleiben unverändert.

Die so erhaltene Masse wird in 310 ml PE-Kartuschen abgefüllt und 24 Stunden bei 20°C vor der Untersuchung gelagert.

### Vergleichsbeispiel 1

### Herstellung einer nicht erfindungsgemäßen Klebstoffformulierung

Es wird vorgegangen wie in Beispiel 2 beschrieben. Allerdings werden die in Beispiel 2 angegebenen Einsatzmengen für GENIOSIL® STP-E35, das Polypropylenglycol mit einer mittleren Molmasse Mₙ von 2000 g/mol und das Phenylsiliconharz variiert. So werden hier 156,8 g GENIOSIL® STP-E35, 19,2 g eines Polypropylenglycols mit einer mittleren Molmasse Mₙ von 2000 g/mol und 23,2 g eines Harzes hergestellt nach Beispiel 1 eingesetzt. Die Einsatzmengen aller übrigen Rohstoffe bleiben unverändert.

Die so erhaltene Masse wird in 310 ml PE-Kartuschen abgefüllt und 24 Stunden bei 20°C vor der Untersuchung gelagert.

### Vergleichsbeispiel 2

### Herstellung einer nicht erfindungsgemäßen Klebstoffformulierung

Es wird vorgegangen wie in Beispiel 2 beschrieben. Allerdings wird hier auf den Zusatz eines Polypropylenglycols mit einer mittleren Molmasse Mₙ von 2000 g/mol ganz verzichtet, und die in Beispiel 2 angegebenen Einsatzmengen für GENIOSIL® STP-E35 und das Phenylsiliconharz werden variiert.
So werden hier 173,5 g GENIOSIL® STP-E35, und 25,7 g eines Harzes hergestellt nach Beispiel 1 eingesetzt. Die Einsatzmengen aller übrigen Rohstoffe bleiben unverändert.

Die so erhaltene Masse wird in 310 ml PE-Kartuschen abgefüllt und 24 Stunden bei 20°C vor der Untersuchung gelagert.

### Beispiel 4

### Herstellung einer erfindungsgemäßen Klebstoffformulierung

Es wird vorgegangen wie in Beispiel 2 beschrieben. Allerdings werden die in Beispiel 2 angegebenen Einsatzmengen für GENIOSIL® STP-E35 und das Phenylsiliconharz variiert.
So werden hier 103,6 g GENIOSIL® STP-E35 und 36,4 g eines Harzes hergestellt nach Beispiel 1 eingesetzt. Die Einsatzmengen aller übrigen Rohstoffe bleiben unverändert.

Die so erhaltene Masse wird in 310 ml PE-Kartuschen abgefüllt und 24 Stunden bei 20°C vor der Untersuchung gelagert.

### Vergleichsbeispiel 3

### Herstellung einer nicht erfindungsgemäßen Klebstoffformulierung

Es wird vorgegangen wie in Beispiel 2 beschrieben. Allerdings wird hier auf den Zusatz eines Phenylsiliconharzes verzichtet, Stattdessen werden 140,0 g GENIOSIL® STP-E35 anstelle der in Beispiel 2 verwendeten 122 g eingesetzt. Die Einsatzmengen aller übrigen Rohstoffe bleiben unverändert.

Die so erhaltene Masse wird in 310 ml PE-Kartuschen abgefüllt und 24 Stunden bei 20°C vor der Untersuchung gelagert.

### Beispiel 5

Die in den Beispielen 2 bis 4 sowie in den Vergleichsbeispielen 1 bis 3 (V1 bis V3) erhaltenen Massen werden vernetzen gelassen und hinsichtlich ihrer Hautbildung und ihrer mechanischen Eigenschaften untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Mechanische Eigenschaften

Die Massen wurden jeweils auf ausgefrästen Teflonplatten mit 2 mm Tiefe ausgestrichen und 2 Wochen bei 23°C, 50% rel. Luftfeuchte gehärtet.

Shore-A-Härte wird gemäß DIN 53505 bestimmt.
Reißfestigkeit wird gemäß DIN 53504-S1 bestimmt.
Reißdehnung wird gemäß DIN 53504-S1 bestimmt.

**Tabelle 1**

| **Masse aus Beispiel** | **2** | **3** | **V1** | **V2** | **4** | **V3** |
|---|---|---|---|---|---|---|
| Verhältnis Komponente (B) zu Komponente (A) | 0,15 | 0,15 | 0,15 | 0,15 | 0,35 | 0,00 |
| Verhältnis Komponente (C) zu Komponente (A) | 0,49 | 0,28 | 0,12 | 0,00 | 0,57 | 0,42 |
| HBZ [min] | 36 | 36 | 43 | 32 | 94 | 8 |
| Shore-A-Härte | 50 | 55 | 61 | 62 | 54 | 50 |
| Reißfestigkeit [N/mm²] | 4,1 | 4,5 | 4,1 | 4,0 | 5,6 | 3,2 |
| Reißdehnung [%] | 680 | 613 | 419 | 355 | 748 | 418 |

Der Vergleich der Beispiele V2, V1, 3 und 2 zeigt, wie sich die Reißdehnung mit zunehmendem Weichmachergehalt (Komponente (C)) verbessert. Gerade in dem Bereich zwischen zu kleinen, nicht erfindungsgemäßen Weichmachergehalten und den erfindungsgemäßen Weichmachergehalten kommt es zu einer fast sprunghaften Verbesserung der Reißdehnung um fast 200%. Bemerkenswert ist, dass sich die Reißfestigkeit dabei nicht verschlechtert, sondern in etwa auf einem Niveau bleibt, wobei der beste Wert mit der erfindungsgemäßen Masse aus Beispiel 2 erzielt wird.

Ebenso auffallende Ergebnisse zeigt ein Vergleich der Beispiele V3, 2 und 5. Hier verbessert sich nicht nur die Reißfestigkeit sondern auch die Reißdehnung der erfindungsgemäßen Massen mit einem steigenden Gehalt an Phenylsiliconharzen (Komponente (B)). Dieses extrem positive Zusammenwirken der Komponenten (B) und (C) ist vollkommen überraschend.

### Beispiel 6

### Herstellung einer erfindungsgemäßen Klebstoffformulierung

82,0 g silanterminiertes Polypropylenglycol mit einer mittleren Molmasse (Mₙ) von 18000 g/mol und 2 Endgruppen der Formel -O-C(=O)-NH-(CH₂)₃-Si(OCH₃)₃ (käuflich erhältlich unter der Bezeichnung GENIOSIL® STP-E35 bei der Fa. Wacker Chemie AG, D-München) und 59,2 g eines Polypropylenglycol mit einer mittleren Molmasse Mₙ von 2000 g/mol werden vermischt und in einem Laborplanetenmischer der Fa. PC-Laborsystem, ausgestattet mit zwei Balkenmischern, bei ca. 25°C mit 8,0 g Vinyltrimethoxysilan, 18,0 g eines Harzes hergestellt nach Beispiel 1 und 2,0 g einer Stabilisatormischung (käuflich erhältlich unter der Bezeichnung TINUVIN® B 75 bei der BASF AG, Deutschland) für 2 Minuten bei 200 U/min homogenisiert. Danach werden 186,0 g einer mit Fettsäure beschichteten gefällten Kreide mit einem mittleren Teilchendurchmesser (D50%) von ca. 0,07 µm (käuflich erhältlich unter der Bezeichnung Hakuenka® CCR S10 bei der Shiraishi Omya GmbH, AT-Gummern) und 40,0 g eines mit Stearinsäure beschichteten Marmormehls mit einem mittleren Teilchendurchmesser (D50%) von ca. 2,0 µm (käuflich erhältlich unter der Bezeichnung Omyabond® 520 bei der Firma Omya, D-Köln) unter Rühren eine Minute bei 600 U/min aufgeschlossen. Nach Einarbeitung der der Füllstoffe werden 4 g Aminopropyl-trimethoxysilan und 0,8 g Dioctylzinndilaurat für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Vergleichsbeispiel 4

### Herstellung einer nicht erfindungsgemäßen Klebstoffformulierung

Es wird vorgegangen wie in Beispiel 6 beschrieben. Allerdings werden die in Beispiel 6 angegebenen Einsatzmengen für GENIOSIL® STP-E35 und das Polypropylenglycol mit einer mittleren Molmasse Mₙ von 2000 g/mol variiert.

So werden hier 122,0 g GENIOSIL® STP-E35 und 19,2 g eines Polypropylenglycol mit einer mittleren Molmasse Mₙ von 2000 g/mol eingesetzt. Die Einsatzmengen aller übrigen Rohstoffe bleiben unverändert.

Die so erhaltene Masse wird in 310 ml PE-Kartuschen abgefüllt und 24 Stunden bei 20 °C vor der Untersuchung gelagert.

### Beispiel 7

### Herstellung einer erfindungsgemäßen Klebstoffformulierung

103,6 g silanterminiertes Polypropylenglycol mit einer mittleren Molmasse (Mₙ) von 12000 g/mol und 2 Endgruppen der Formel -O-C(=O)-NH-CH₂-Si(CH₃)(OCH₃)₂ (käuflich erhältlich unter der Bezeichnung GENIOSIL® STP-E10 bei der Fa. Wacker Chemie AG, D-München) und 64,0 g eines Polypropylenglycols mit einer mittleren Molmasse Mₙ von 2000 g/mol werden vermischt und in einem Laborplanetenmischer der Fa. PC-Laborsystem, ausgestattet mit zwei Balkenmischern, bei ca. 25°C mit 4,0 g Vinyltrimethoxysilan, 36,4 g eines Harzes hergestellt nach Beispiel 1 und 2,0 g einer Stabilisatormischung (käuflich erhältlich unter der Bezeichnung TINUVIN® B 75 bei der BASF AG, Deutschland) für 2 Minuten bei 200 U/min homogenisiert. Danach werden 186,0 g einer mit Fettsäure beschichteten gefällten Kreide mit einem mittleren Teilchendurchmesser (D50%) von ca. 0,07 µm (käuflich erhältlich unter der Bezeichnung Hakuenka® CCR S10 bei der Shiraishi Omya GmbH, AT-Gummern) unter Rühren eine Minute bei 600 U/min aufgeschlossen. Nach Einarbeitung der Kreide werden 4 g Aminopropyl-trimethoxysilan für 1 Minute bei 200 U/min eingemischt. Schließlich wird für 2 Minuten bei 600 U/min und für 1 Minute bei 200 U/min beim Druck von ca. 100 mbar homogenisiert und blasenfrei gerührt.

Die so erhaltene Masse wird in 310 ml PE-Kartuschen abgefüllt und 24 Stunden bei 20°C vor der Untersuchung gelagert.

### Beispiel 8

Die in den Beispielen 6 und 7 sowie im Vergleichsbeispiel 4 (V4) erhaltenen Massen werden vernetzen gelassen und hinsichtlich ihrer Hautbildung und ihrer mechanischen Eigenschaften untersucht. Die Ergebnisse finden sich in Tabelle 2.

Hautbildungszeit (HBZ) und die mechanischen Eigenschaften wurden dabei bestimmt wie in Beispiel 5 bestimmt.

**Tabelle 2**

| **Masse aus Beispiel** | **6** | **V4** | **7** |
|---|---|---|---|
| HBZ [min] | 37 | 27 | 61 |
| Shore-A-Härte | 55 | 61 | 46 |
| Reißfestigkeit [N/mm²] | 3,3 | 3,7 | 3,8 |
| Reißdehnung [%] | 599 | 422 | 619 |

## Patentansprüche

1. Vernetzbare Massen enthaltend
(A) 100 Gewichtsteile Verbindungen der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen Polymerrest bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist,
(B) mindestens 5 Gewichtsteile Siliconharze enthaltend Einheiten der Formel
R³_{c}(R⁴O)_{d}R⁵ₑSiO_{(4-c-d-e)/2} (II),
wobei
R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R⁴ gleich oder verschieden sein kann und Wasserstoffatom oder einen einwertigen, gegebenenfalls substituierten Kohlenwasserstoffrest bedeutet,
R⁵ gleich oder verschieden sein kann und einen einwertigen, SiC-gebundenen, gegebenenfalls substituierten aromatischen Kohlenwasserstoffrest bedeutet,
c 0, 1, 2 oder 3 ist,
d 0, 1, 2 oder 3 ist und
e 0, 1 oder 2 ist,
mit der Maßgabe, dass die Summe aus c+d+e kleiner oder gleich 3 ist und in mindestens 40 % der Einheiten der Formel (II) die Summe c+e gleich 0 oder 1 ist,
wobei als Komponente (B) Siliconharze (B1) eingesetzt werden, die, jeweils bezogen auf die Gesamtzahl an Einheiten der Formel (II), mindestens 20% Einheiten der Formel (II) aufweisen, in denen e für den Wert 1 steht, die weniger als 0,1 Gew.-% aromatische Lösungsmittel (BL) enthält,
und
(C) mindestens 26 Gewichtsteile eines nicht reaktiven Weichmachers, wobei als nicht reaktive Weichmacher (C) sämtliche organischen Verbindungen gelten, die bei Temperaturen <80°C weder mit Wasser noch mit den Komponenten (A) und (B) reagieren, bei 20°C und 1013 hPa flüssig sind, einen Siedepunkt >250°C bei 1013 hPa aufweisen und ausgewählt sind aus den Stoffgruppen bestehend aus
• vollständig veresterten aromatischen oder aliphatischen Carbonsäuren,
• vollständig veresterten Derivaten der Phosphorsäure,
• vollständig veresterten Derivaten der Sulfonsäuren,
• verzweigten oder unverzweigten gesättigten Kohlenwasserstoffen,
• Polystyrolen,
• Polybutadienen,
• Polyisobutylenen,
• Polyestern und
• Polyethern.

2. Vernetzbare Massen gemäß Anspruch 1, **dadurch gekennzeichnet, dass** es sich bei Rest Y um Polyurethanreste oder Polyoxyalkylenreste handelt.

3. Vernetzbare Massen gemäß Anspruch 1 oder 2, **dadurch gekennzeichnet, dass** als Komponente (B) Siliconharze (B1) eingesetzt werden, die, jeweils bezogen auf die Gesamtzahl an Einheiten der Formel (II), mindestens 40% Einheiten der Formel (II) aufweisen, in denen e für den Wert 1 steht.

4. Vernetzbare Massen gemäß einem oder mehreren der Ansprüche 1 bis 3, **dadurch gekennzeichnet, dass** es sich bei Komponente (C) um phthalsäureesterfreie Weichmacher handelt.

5. Vernetzbare Massen gemäß einem oder mehreren der Ansprüche 1 bis 4, **dadurch gekennzeichnet, dass** es sich bei Weichmacher (C) um Polyether handelt.

6. Vernetzbare Massen gemäß einem oder mehreren der Ansprüche 1 bis 5, **dadurch gekennzeichnet, dass** Komponente (C) in Mengen von 30 bis 300 Gewichtsteilen, bezogen auf 100 Gewichtsteile der Komponente (A), enthalten ist.

7. Vernetzbare Massen gemäß einem oder mehreren der Ansprüche 1 bis 6, **dadurch gekennzeichnet, dass** es sich bei den Massen um solche handelt enthaltend
(A) 100 Gewichtsteile Verbindungen der Formel (I),
(B) 10-50 Gewichtsteile Siliconharze enthaltend Einheiten der Formel (II), wobei es sich vorzugsweise um Harze (B1) handelt,
(C) 30-150 Gewichtsteile Weichmacher,
(D) 0,1-25 Gewichtsteile Organosiliciumverbindungen enthaltend Einheiten der Formel,
DₕSi(OR⁷)_{g}R⁶_{f}O_{(4-f-g-h)/2} (III),
worin
R⁶ gleich oder verschieden sein kann und einen einwertigen, gegebenenfalls substituierten SiC-gebundenen, von Stickstoff freien organischen Rest bedeutet,
R⁷ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit mindestens einem nicht an eine Carbonylgruppe (C=O) gebundenen Stickstoffatom bedeutet,
f 0, 1, 2 oder 3 ist,
g 0, 1, 2 oder 3 ist und
h 0, 1, 2, 3 oder 4 ist,
mit der Maßgabe, dass die Summe aus f+g+h kleiner oder gleich 4 ist und pro Molekül mindestens ein Rest D anwesend ist,
(E) 40 bis 1000 Gewichtsteile Füllstoffe,
gegebenenfalls
(F) Katalysatoren,
gegebenenfalls
(G) Haftvermittler,
gegebenenfalls
(H) Wasserfänger,
gegebenenfalls
(I) Additive und
gegebenenfalls
(J) Zuschlagstoffe.

8. Verfahren zur Herstellung der Masse gemäß einem oder mehreren der Ansprüche 1 bis 7 durch Mischen der einzelnen Komponenten in beliebiger Reihenfolge.

9. Formkörper, hergestellt durch Vernetzung der Massen gemäß einem oder mehreren der Ansprüche 1 bis 7.

10. Verfahren zur Herstellung von Materialverbunden, bei denen die Masse gemäß einem oder mehreren der Ansprüche 1 bis 7 auf mindestens ein Substrat aufgebracht und anschließend vernetzen gelassen wird.

## Claims

1. Crosslinkable composition comprising
(A) 100 parts by weight of compounds of the formula
Y-[(CR¹₂)_{b}-SiRₐ(OR²)₃₋ₐ]ₓ (I),
where
Y is an x-valent polymer radical bonded via nitrogen, oxygen, sulfur or carbon,
R may be identical or different and is a monovalent, optionally substituted hydrocarbon radical,
R¹ may be identical or different and is a hydrogen atom or a monovalent, optionally substituted hydrocarbon radical which may be attached to the carbon atom via nitrogen, phosphorus, oxygen, sulfur or carbonyl group,
R² may be identical or different and is a hydrogen atom or a monovalent, optionally substituted hydrocarbon radical,
x is an integer from 1 to 10,
a may be identical or different and is 0, 1 or 2, and
b may be identical or different and is an integer from 1 to 10,
(B) at least 5 parts by weight of silicone resins comprising units of the formula
R³_{c}(R⁴O)_{d}R⁵ₑSiO(_{4-c-d-e})/2 (II),
where
R³ may be identical or different and is hydrogen atom, a monovalent, SiC-bonded, optionally substituted aliphatic hydrocarbon radical or a divalent, optionally substituted, aliphatic hydrocarbon radical which bridges two units of the formula (II),
R⁴ may be identical or different and is hydrogen atom or a monovalent, optionally substituted hydrocarbon radical,
R⁵ may be identical or different and is a monovalent, SiC-bonded, optionally substituted aromatic hydrocarbon radical,
c is 0, 1, 2 or 3,
d is 0, 1, 2 or 3, and
e is 0, 1 or 2,
with the proviso that the sum of c+d+e is less than or equal to 3 and in at least 20% of the units of formula (II) the sum c+e is equal to 0 or 1,
where silicone resins (B1) are used as component (B) which have, based in each case on the total number of units of the formula (II), at least 20% of units of the formula (II) in which the value of e is 1, which contains less than 0.1 wt% of aromatic solvents (BL), and
(C) at least 26 parts by weight of a nonreactive plasticizer, with nonreactive plasticizers (C) being deemed to be all organic compounds which at temperatures < 80°C react neither with water nor with components (A) and (B), which are liquid at 20°C and 1013 hPa, which have a boiling point > 250°C at 1013 hPa and which are selected from the groups of substances consisting of
• fully esterified aromatic or aliphatic carboxylic acids,
• fully esterified derivatives of phosphoric acid,
• fully esterified derivatives of sulfonic acids,
• branched or unbranched saturated hydrocarbons,
• polystyrenes,
• polybutadienes,
• polyisobutylenes,
• polyesters, and
• polyethers.

2. Crosslinkable composition according to Claim 1, **characterized in that** radical Y comprises polyurethane radicals or polyoxyalkylene radicals.

3. Crosslinkable composition according to Claim 1 or 2, **characterized in that** silicone resins (B1) are used as component (B) which have, based in each case on the total number of units of the formula (II), at least 40% of units of the formula (II) in which the value of e is 1.

4. Crosslinkable composition according to one or more of Claims 1 to 3, **characterized in that** component (C) comprises plasticizers which are free of phthalic esters.

5. Crosslinkable composition according to one or more of Claims 1 to 4, **characterized in that** plasticizer (C) comprises polyethers.

6. Crosslinkable composition according to one or more of Claims 1 to 5, **characterized in that** component (C) is present in amounts of 30 to 300 parts by weight, based on 100 parts by weight of component (A).

7. Crosslinkable composition according to one or more of Claims 1 to 6, **characterized in that** the composition is one comprising
(A) 100 parts by weight of compounds of the formula (I),
(B) 10-50 parts by weight of silicone resins comprising units of the formula (II), which are preferably resins (B1),
(C) 30-150 parts by weight of plasticizers,
(D) 0.1-25 parts by weight of organosilicon compounds comprising units of the formula
DₕSi(OR⁷)_{g}R⁶_{f}O(_{4-f-g-h)}/2 (III),
in which
R⁶ may be identical or different and is a monovalent, optionally substituted, SiC-bonded, nitrogen-free organic radical,
R⁷ may be identical or different and is hydrogen atom or optionally substituted hydrocarbon radicals,
D may be identical or different and is a monovalent, SiC-bonded radical having at least one nitrogen atom not bonded to a carbonyl group (C=O),
f is 0, 1, 2 or 3,
g is 0, 1, 2 or 3, and
h is 0, 1, 2, 3 or 4,
with the proviso that the sum of f+g+h is less than or equal to 4 and there is at least one radical D per molecule,
(E) 40 to 1000 parts by weight of fillers,
optionally
(F) catalysts,
optionally
(G) adhesion promoters,
optionally
(H) water scavengers,
optionally
(I) additives, and
optionally
(J) adjuvants.

8. Process for preparing the composition according to one or more of Claims 1 to 7 by mixing the individual components in any order.

9. Shaped article produced by crosslinking the composition according to one or more of Claims 1 to 7.

10. Method for producing composited materials, wherein the composition according to one or more of claims 1 to 7 is applied to at least one substrate and subsequently allowed to crosslink.

## Revendications

1. Matériaux réticulables, contenant :
(A) 100 parties en poids de composés de formule
Y-[(CR¹₂)_{b}-SiRₐ(OR²)₃₋ₐ)ₓ (I)
dans laquelle
Y signifie un radical polymère x-valent, relié par un azote, un oxygène, un soufre ou un carbone,
les R peuvent être identiques ou différents, et représentent un radical hydrocarboné monovalent, éventuellement substitué,
les R¹ peuvent être identiques ou différents, et représentent un atome d'hydrogène ou un radical hydrocarboné monovalent, éventuellement substitué, qui peut être relié à l'atome de carbone par un azote, un phosphore, un oxygène, un soufre ou un groupe carbonyle,
les R² peuvent être identiques ou différents, et représentent un atome d'hydrogène ou un radical hydrocarboné monovalent, éventuellement substitué,
x est un nombre entier de 1 à 10,
les a peuvent être identiques ou différents, et représentent 0, 1 ou 2, et
les b peuvent être identiques ou différents, et représentent un nombre entier de 1 à 10,
(B) au moins 5 parties en poids de résines de silicone contenant des unités de formule
R³_{c}(R⁴O)_{d}R⁵ₑSiO(_{4-c-d-e})/2 (II)
dans laquelle
les R³ peuvent être identiques ou différents, et signifient un atome d'hydrogène, un radical hydrocarboné aliphatique monovalent, relié à SiC, éventuellement substitué, ou un radical hydrocarboné aliphatique bivalent éventuellement substitué, qui ponte deux unités de formule (II),
les R⁴ peuvent être identiques ou différents, et signifient un atome d'hydrogène, un radical hydrocarboné monovalent éventuellement substitué,
les R⁵ peuvent être identiques ou différents, et signifient un radical hydrocarboné aromatique monovalent, relié à SiC, éventuellement substitué,
c représente 0, 1, 2 ou 3,
d représente 0, 1, 2 ou 3, et
e représente 0, 1 ou 2,
à condition que la somme de c+d+e soit inférieure ou égale à 3 et que, dans au moins 40 % des unités de formule (II), la somme c+e soit égale à 0 ou 1,
en tant que composant (B), des résines de silicone (B1) étant utilisées, qui comprennent, à chaque fois par rapport au nombre total d'unités de formule (II), au moins 20 % d'unités de formule (II) dans lesquelles e représente la valeur 1, qui contiennent moins de 0,1 % en poids de solvants aromatiques (BL),
et
(C) au moins 26 parties en poids d'un plastifiant non réactif, le plastifiant non réactif (C) pouvant consister en tous les composés organiques qui ne réagissent ni avec l'eau, ni avec les composants (A) et (B) à des températures < 80 °C, qui sont liquides à 20 °C et 1 013 hPa, qui présentent un point d'ébullition > 250 °C à 1 013 hPa, et qui sont choisis dans les groupes de substances constitués par :
- les acides carboxyliques aromatiques ou aliphatiques entièrement estérifiés,
- les dérivés entièrement estérifiés de l'acide phosphorique,
- les dérivés entièrement estérifiés des acides sulfoniques,
- les hydrocarbures saturés ramifiés ou non ramifiés,
- les polystyrènes,
- les polybutadiènes,
- les polyisobutylènes,
- les polyesters et
- les polyéthers.

2. Matériaux réticulables selon la revendication 1, **caractérisés en ce que** le radical Y consiste en des radicaux polyuréthane ou des radicaux polyoxyalkylène.

3. Matériaux réticulables selon la revendication 1 ou 2, **caractérisés en ce qu'**en tant que composant (B), des résines de silicone (B1) sont utilisées, qui comprennent, à chaque fois par rapport au nombre total d'unités de formule (II), au moins 40 % d'unités de formule (II) dans lesquelles e représente la valeur 1.

4. Matériaux réticulables selon une ou plusieurs des revendications 1 à 3, **caractérisés en ce que** le composant (C) consiste en des plastifiants exempts d'esters de l'acide phtalique.

5. Matériaux réticulables selon une ou plusieurs des revendications 1 à 4, **caractérisés en ce que** le plastifiant (C) consiste en des polyéthers.

6. Matériaux réticulables selon une ou plusieurs des revendications 1 à 5, **caractérisés en ce que** le composant (C) est contenu en quantités de 30 à 300 parties en poids, par rapport à 100 parties en poids du composant (A).

7. Matériaux réticulables selon une ou plusieurs des revendications 1 à 6, **caractérisés en ce que** les matériaux consistent en des matériaux qui contiennent :
(A) 100 parties en poids de composés de formule (I),
(B) 10 à 50 parties en poids de résines de silicone contenant des unités de formule (II), celles-ci consistant de préférence en des résines (B1),
(C) 30 à 150 parties en poids de plastifiants,
(D) 0,1 à 25 parties en poids de composés d'organosilicium contenant des unités de formule
DₕSi(OR⁷)_{g}R⁶_{f}O_{(4-f-g-h)}/2 (III)
dans laquelle
les R⁶ peuvent être identiques ou différents, et signifient un radical organique monovalent, éventuellement substitué, relié à SiC, exempt d'azote, les R⁷ peuvent être identiques ou différents, et signifient un atome d'hydrogène ou des radicaux hydrocarbonés éventuellement substitués,
les D peuvent être identiques ou différents, et signifient un radical monovalent, relié à SiC, contenant au moins un atome d'azote non relié à un groupe carbonyle (C=O),
f représente 0, 1, 2 ou 3,
g représente 0, 1, 2 ou 3, et
h représente 0, 1, 2, 3 ou 4,
à condition que la somme de f+g+h soit inférieure ou égale à 4 et qu'au moins un radical D soit présent par molécule,
(E) 40 à 1 000 parties en poids de charges, éventuellement
(F) des catalyseurs,
éventuellement
(G) des promoteurs d'adhésion,
éventuellement
(H) des capteurs d'eau,
éventuellement
(I) des additifs et
éventuellement
(J) des adjuvants.

8. Procédé de fabrication du matériau selon une ou plusieurs des revendications 1 à 7 par mélange des composants individuels dans un ordre quelconque.

9. Corps moulé, fabriqué par réticulation des matériaux selon une ou plusieurs des revendications 1 à 7.

10. Procédé de fabrication de matériaux composites, selon lequel le matériau selon une ou plusieurs des revendications 1 à 7 est appliqué sur au moins un substrat, puis laissé réticuler.
